# EUROPEAN PATENT SPECIFICATION

(11) **EP 3 452 752 B1**
(45) Date of publication and mention of the grant of the patent: **02.11.2022**
(21) Application number: 17723214.7
(22) Date of filing: 02.05.2017
(51) Int. Cl.: F17C 7/00

(54) **METHOD OF IMPROVING COMPRESSED NATURAL GAS TANK FILL**
VERFAHREN ZUR VERBESSERTEN FÜLLUNG EINES TANKS MIT KOMPRIMIERTEM ERDGAS
PROCÉDÉ D'AMÉLIORATION DE REMPLISSAGE DE RÉSERVOIR DE GAZ NATUREL COMPRIMÉ

(30) Priority: 03.05.2016 US 201662330978 P
(43) Date of publication of application: 13.03.2019
(73) Proprietor: Carrier Corporation, Farmington, CT 06032 (US)
(72) Inventor: SWAB, Michael, Athens Georgia 30601 (US)
(74) Representative: Schmitt-Nilson Schraud Waibel Wohlfrom Patentanwälte Partnerschaft mbB
(86) International application number: PCT/US2017/030619
(87) International publication number: WO 2017/192574

(56) References cited:
- EP-A1- 2 617 587
- WO-A1-2010/077812
- US-A- 5 921 090
- US-A1- 2016 059 690

## Description

### BACKGROUND OF THE DISCLOSURE

The embodiments herein generally relate to compressed natural gas tanks and more specifically, to methods and apparatus for cooling compressed natural gas as it flows into compressed natural gas tanks.

WO 2010/077812 A1 shows a refrigeration unit having a compressor, a condenser heat exchanger, an evaporator heat exchanger, and an evaporator expansion device. The condenser heat exchanger comprises a primary heat exchange coil and a sub cooling coil disposed in series refrigeration flow relationship. An airflow is driven through the condenser heat exchanger by fans. The same refrigerant flows through the coils.

US 2016/059690 A1 shows a natural gas filling system for a vehicle including a piping system defining a first flow path, a receptacle, a tank, and a cooling circuit. The piping system includes a first end and a second end. The receptacle is coupled to the first end of the piping system, and the receptacle is configured to engage a natural gas filling station. The tank is in fluid communication with the receptacle and is configured to store a natural gas supply. The cooling circuit defines a second flow path and includes an expansion valve configured to reduce a pressure of a secondary fluid flow. The second flow path is in thermal communication with the first flow path such that heat transfer from the piping system into the cooling circuit cools the natural gas flowing between the receptacle and the tank.

Typically, transport refrigeration systems are used to transport and distribute cargo, or more specifically perishable goods and environmentally sensitive goods (herein referred to as perishable goods) that may be susceptible to temperature, humidity, and other environmental factors. Perishable goods may include but are not limited to fruits, vegetables, grains, beans, nuts, eggs, dairy, seed, flowers, meat, poultry, fish, ice, and pharmaceuticals. Advantageously, transport refrigeration systems allow perishable goods to be effectively transported and distributed without damage or other undesirable effects.

Refrigerated trucks and trailers are commonly used to transport perishable goods in a cold chain distribution system. A transport refrigeration system is mounted to the truck or to the trailer in operative association with a cargo space defined within the truck or trailer for maintaining a controlled temperature environment within the cargo space.

Conventionally, transport refrigeration systems used in connection with refrigerated trucks and refrigerated trailers include a refrigeration unit having a refrigerant compressor, a condenser with one or more associated condenser fans, an expansion device, and an evaporator with one or more associated evaporator fans, which are connected via appropriate refrigerant lines in a closed refrigerant flow circuit. Air or an air/ gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

On commercially available transport refrigeration systems used in connection with refrigerated trucks and refrigerated trailers, the compressor, and typically other components of the refrigeration unit, must be powered during transit by a prime mover. In the case of refrigerated trailers, the prime mover typically comprises a diesel engine but it may be a compressed natural gas engine. The prime mover is carried on and considered part of the transport refrigeration system. In mechanically driven transport refrigeration systems the compressor is driven by the diesel engine, either through a direct mechanical coupling or a belt drive, and other components, such as the condenser and evaporator fans are belt driven.

An "all electric" transport refrigeration system for a refrigerated trailer application is also commercially available through Carrier Corporation. In the all electric transport refrigeration system, a prime mover, carried on and considered part of the transport refrigeration system, drives an AC synchronous generator that generates AC power. The generated AC power is used to power an electric compressor motor for driving the refrigerant compressor of the refrigeration unit and also powering electric AC fan motors for driving the condenser and evaporator motors and electric heaters associated with the evaporator. For example, U.S. Pat. No. 6,223,546 discloses an all electric transport refrigeration system.

Some transport refrigeration systems utilize compressed natural gas (CNG) to power the refrigerated truck itself and also the prime mover. During a fast fill of CNG into a compressed natural gas tank of the refrigerated truck, the CNG enters the tank and heats up from the compression process. The tank often has to be designed to handle the excess heat generated during the filling process, which typically results in larger and heavier tanks to absorb the heat. Once the CNG cools in the tank, the CNG decreases in volume and thus the tank may no longer be completely filled to maximum capacity. This incomplete fill reduces the range of the refrigerated truck.

### BRIEF DESCRIPTION OF THE DISCLOSURE

According to one embodiment, a system for cooling compressed natural gas according to claim 1 is provided.

In addition to one or more of the features described above, or as an alternative, further embodiments of the system may include a refrigeration unit fluidly connected to the refrigerant coil. The refrigeration unit including at least one of a refrigerant compression device and a refrigerant heat rejection heat exchanger. The refrigerant compression device includes a suction side.

In addition to one or more of the features described above, or as an alternative, further embodiments of the system may include a first bypass valve fluidly connected to the refrigeration unit and the refrigerant coil. The first bypass valve being configured to direct the refrigerant from the refrigerant heat rejection heat exchanger to the refrigerant inlet, when the first bypass valve is activated. Further embodiments of the system may also include a second bypass valve fluidly connected to the refrigeration unit and the refrigerant coil. The second bypass valve being configured to direct the refrigerant from the refrigerant outlet to the suction side of the refrigerant compression device, when the second bypass valve is activated.

In addition to one or more of the features described above, or as an alternative, further embodiments of the system may include a compressed natural gas tank fluidly connected to the compressed natural gas outlet.

According to another embodiment, a method of cooling compressed natural gas according to claim 5 is provided. The method comprises flowing compressed natural gas through a compressed natural gas coil located in a compartment. The compressed natural gas coil having a compressed natural gas inlet and a compressed natural gas outlet. The method also comprises circulating a refrigerant through a refrigerant coil located in the compartment. The refrigerant coil having a refrigerant inlet and a refrigerant outlet. The method further comprises transferring heat from the compressed natural gas coil to the refrigerant coil through a heat transfer fluid located within the compartment. The heat transfer fluid thermally connecting the compressed natural gas coil to the refrigerant coil.

In addition to one or more of the features described above, or as an alternative, further embodiments of the method may include cooling, using a refrigeration unit, the refrigerant. The refrigeration unit includes at least one of a refrigerant compression device and a refrigerant heat rejection heat exchanger. The refrigerant compression device includes a suction side.

In addition to one or more of the features described above, or as an alternative, further embodiments of the method may include directing, using a first bypass valve, the refrigerant from the refrigerant heat rejection heat exchanger to the refrigerant inlet when the first bypass valve is activated. The first bypass valve being fluidly connected to the refrigeration unit and the refrigerant coil. Further embodiments of the method may also include directing, using a second bypass valve, the refrigerant from refrigerant outlet to the suction side of the refrigerant compression device when the second bypass valve is activated, the second bypass valve being fluidly connected to the refrigeration unit and the refrigerant coil.

In addition to one or more of the features described above, or as an alternative, further embodiments of the method may include filling a compressed natural gas tank with compressed natural gas from the compressed natural gas outlet. The compressed natural gas tank being fluidly connected to the compressed natural gas outlet.

According to another embodiment, a controller of a transport refrigeration system according to claim 9 is provided.

In addition to one or more of the features described above, or as an alternative, further embodiments of the controller may include cooling, using a refrigeration unit, the refrigerant. The refrigeration unit including at least one of a refrigerant compression device and a refrigerant heat rejection heat exchanger. The refrigerant compression device includes a suction side.

In addition to one or more of the features described above, or as an alternative, further embodiments of the controller may include directing, using a first bypass valve, the refrigerant from the refrigerant heat rejection heat exchanger to the refrigerant inlet when the first bypass valve is activated. The first bypass valve being fluidly connected to the refrigeration unit and the refrigerant coil. Further embodiments of the controller may also include directing, using a second bypass valve, the refrigerant from refrigerant outlet to the suction side of the refrigerant compression device when the second bypass valve is activated. The second bypass valve being fluidly connected to the refrigeration unit and the refrigerant coil.

In addition to one or more of the features described above, or as an alternative, further embodiments of the controller may include filling a compressed natural gas tank with compressed natural gas from the compressed natural gas outlet. The compressed natural gas tank being fluidly connected to the compressed natural gas outlet.

Technical effects of embodiments of the present disclosure include cooling compressed natural gas utilizing the refrigerant from a refrigeration unit of a transport refrigeration vehicle while filling a compressed natural gas tank of the transport refrigeration vehicle.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter which is regarded as the disclosure is particularly pointed out and distinctly claimed in the claims at the conclusion of the specification. The foregoing and other features and advantages of the disclosure are apparent from the following detailed description taken in conjunction with the accompanying drawings in which:
FIG. 1 is a schematic illustration of a transport refrigeration system and a compressed natural gas heat exchanger, according to an embodiment of the present disclosure; and
FIG. 2 is an enlarged cross-sectional schematic illustration of the transport refrigeration system and a compressed natural gas heat exchanger of FIG. 1, according to an embodiment of the present disclosure.

### DETAILED DESCRIPTION OF THE DISCLOSURE

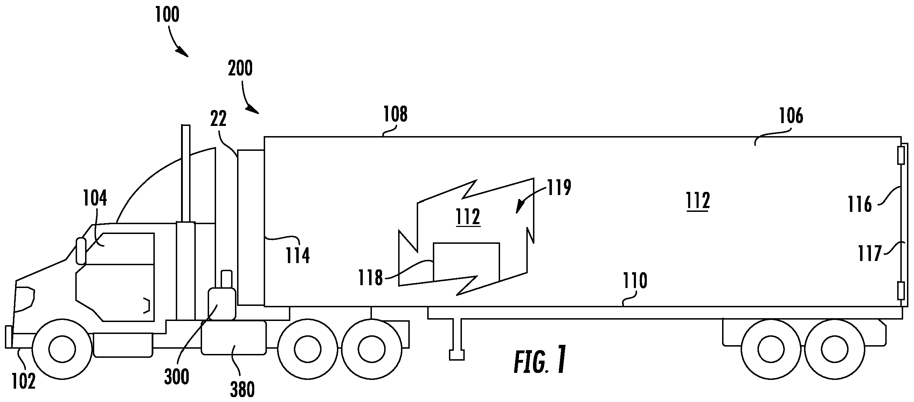

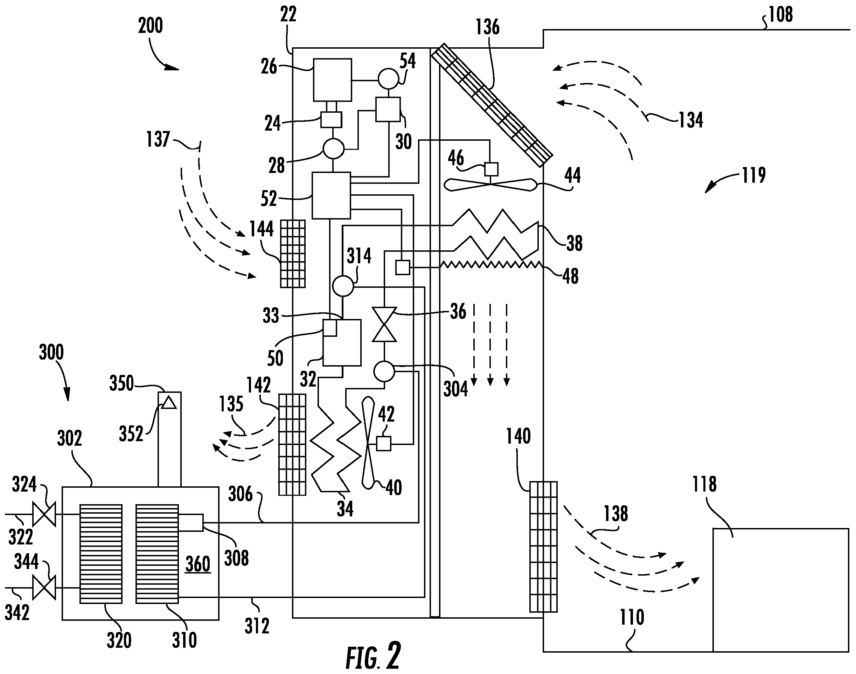

Referring to FIGs. 1 and 2. FIG. 1 shows a schematic illustration of a transport refrigeration system 200 and a compressed natural gas heat exchanger 300, according to an embodiment of the present disclosure. FIG. 2 shows an enlarged cross-sectional schematic illustration of the transport refrigeration system 200 and a compressed natural gas heat exchanger 300 of FIG. 1, according to an embodiment of the present disclosure. The transport refrigeration system 200 is being illustrated as a trailer system 100 as seen in FIG. 1. The trailer system 100 includes a tractor 102 and a transport container 106. The tractor 102 includes an operator's compartment or cab 104 and an engine (not shown), which acts as the drive system of the trailer system 100. In an embodiment, the engine may be a compressed natural gas engine. The transport container 106 is coupled to the tractor 102. The transport container 106 is a refrigerated trailer and includes a top wall 108, a directly opposed bottom wall 110, opposed side walls 112, and a front wall 114, with the front wall 114 being closest to the tractor 102. The transport container 106 further includes a door or doors 117 at a rear wall 116, opposite the front wall 114. The walls of the transport container 106 define a refrigerated cargo space 119. It is appreciated by those of skill in the art that embodiments described herein may be applied to shipping containers that are shipped by rail, sea, or any other suitable container, without use of a tractor 102.

Typically, transport refrigeration systems 200 are used to transport and distribute perishable goods and environmentally sensitive goods (herein referred to as perishable goods 118). The perishable goods 118 may include but are not limited to fruits, vegetables, grains, beans, nuts, eggs, dairy, seed, flowers, meat, poultry, fish, ice, blood, pharmaceuticals, or any other suitable cargo requiring refrigerated transport. The transport refrigeration system 200 includes a refrigeration unit 22, an electric generation device 24, a prime mover 26 for driving the electric generation device 24, and a controller 30. The refrigeration unit 22 functions, under the control of the controller 30, to establish and regulate a desired environmental parameters, such as, for example temperature, humidity, carbon dioxide, ethylene, and other conditions to the interior compartment 119. In an embodiment, the refrigeration unit 22 is a refrigeration system capable of providing a desired temperature and humidity range.

The refrigeration unit 22 includes a refrigerant compression device 32, a refrigerant heat rejection heat exchanger 34, an expansion device 36, and a refrigerant heat absorption heat exchanger 38 connected in refrigerant flow communication in a closed loop refrigerant circuit and arranged in a conventional refrigeration cycle. The refrigeration unit 22 also includes one or more fans 40 associated with the refrigerant heat rejection heat exchanger 34 and driven by fan motor(s) 42 and one or more fans 44 associated with the refrigerant heat absorption heat exchanger 38 and driven by fan motor(s) 46. The refrigeration unit 22 may also include an electric resistance heater 48 associated with the refrigerant heat absorption heat exchanger 38. It is to be understood that other components (not shown) may be incorporated into the refrigerant circuit as desired, including for example, but not limited to, a suction modulation valve, a receiver, a filter/dryer, an economizer circuit.

The refrigerant heat rejection heat exchanger 34 may, for example, comprise one or more refrigerant conveying coiled tubes or one or more tube banks formed of a plurality of refrigerant conveying tubes across flow path to the heat outlet 142. The fan(s) 40 are operative to pass air, typically ambient air, across the tubes of the refrigerant heat rejection heat exchanger 34 to cool refrigerant vapor passing through the tubes. The refrigerant heat rejection heat exchanger 34 may operate either as a refrigerant condenser, such as if the refrigeration unit 22 is operating in a subcritical refrigerant cycle or as a refrigerant gas cooler, such as if the refrigeration unit 22 is operating in a transcritical cycle.

The refrigerant heat absorption heat exchanger 38 may, for example, also comprise one or more refrigerant conveying coiled tubes or one or more tube banks formed of a plurality of refrigerant conveying tubes extending across flow path from the return air inlet 136. The fan(s) 44 are operative to pass air drawn from the refrigerated cargo space 119 across the tubes of the refrigerant heat absorption heat exchanger 38 to heat and evaporate refrigerant liquid passing through the tubes and cool the air. The air cooled in traversing the refrigerant heat rejection heat exchanger 38 is supplied back to the refrigerated cargo space 119. It is to be understood that the term "air" when used herein with reference to the atmosphere within the cargo box includes mixtures of air with other gases, such as for example, but not limited to, nitrogen or carbon dioxide, sometimes introduced into a refrigerated cargo box for transport of perishable produce.

The refrigerant compression device 32 may comprise a single-stage or multiple-stage compressor such as, for example, a reciprocating compressor or a scroll compressor. The compression device 32 has a compression mechanism (not shown) driven by an electric motor 50. In an embodiment, the motor 50 may be disposed internally within the compressor with a drive shaft interconnected with a shaft of the compression mechanism, all sealed within a common housing of the compression device 32.

The transport refrigeration system 200 also includes a controller 30 configured for controlling operation of the transport refrigeration system 200 including, but not limited to, operation of various components of the refrigerant unit 22 to provide and maintain a desired thermal environment within the refrigerated cargo space 119. The controller 30 may be an electronic controller including a processor and an associated memory comprising computer-executable instructions that, when executed by the processor, cause the processor to perform various operations. The a processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium. The controller 30 controls operation of various components of the refrigerant system 200 and the compressed natural gas heat exchanger 300. The controller 30 may also be able to selectively operate the prime mover 26, typically through an electronic engine controller 54 operatively associated with the prime mover 26.

The refrigeration unit 22 has a plurality of power demand loads, including, but not limited to, the compression device drive motor 50, the drive motor 42 for the fan 40 associated with the refrigerant heat rejection heat exchanger 34, and the drive motor 46 for the fan 44 associated with the refrigerant heat absorption heat exchanger 38. In the depicted embodiment, the electric resistance heater 48 also constitutes a power demand load. The electric resistance heater may be selectively operated by the controller 30 whenever a control temperature within the temperature controlled cargo box drops below a preset lower temperature limit, which may occur in a cold ambient environment. In such an event the controller 30 would activate the electric resistance heater 48 to heat air circulated over the electric resistance heater by the fan(s) 44 associated with the refrigerant heat absorption heat exchanger 38. The heater 48 may also be used to de-ice the return air intake 136.

The prime mover 26, which comprises an on-board fossil-fuel engine, most commonly a diesel engine, drives the electric generation device 24 that generates electrical power. The drive shaft of the engine drives the shaft of the electric generation device 24. In an electrically powered embodiment of the refrigeration unit 20, the electric generation device 24 may comprise a single on- board, engine driven AC generator configured to generate alternating current (AC) power including at least one AC voltage at one or more frequencies. In an embodiment, the electric generation device 24 may, for example, be a permanent magnet AC generator or a synchronous AC generator. In another embodiment, the electric generation device 24 may comprise a single on-board, engine driven DC generator configured to generate direct current (DC) power at at least one voltage. As each of the fan motors 42, 46 and the compression device drive motor 50 may be an AC motor or a DC motor, it is to be understood that various power converters 52, such as AC to DC rectifiers, DC to AC inverters, AC to AC voltage/frequency converters, and DC to DC voltage converters, may be employed in connection with the electric generation device 24 as appropriate. The transport refrigeration system 200 may include a voltage sensor 28 to sense the voltage of the electric generation device 24.

Airflow is circulated into and through the refrigerate cargo space 119 of the transport container 106 by means of the refrigeration unit 22. A return airflow 134 flows into the refrigeration unit 22 from the refrigerated cargo space 119 through a refrigeration unit return air intake 136, and across a refrigerant heat absorption heat exchanger 38 via the fan 44, thus conditioning the return airflow 134 to a selected or predetermined temperature. The conditioned return airflow 134, now referred to as supply airflow 138, is supplied into the refrigerated cargo space 119 of the transport container 106 through a refrigeration unit outlet 140, which in some embodiments is located near the bottom wall 110 of the container system 106. Heat 135 is removed from the refrigerant heat rejection heat exchanger 34 through the heat outlet 142. The refrigeration unit 22 may contain an external air inlet 144, as shown in FIG. 2, to aid in the removal of heat 135 from the refrigerant heat rejection heat exchanger 34 by pulling in external air 137. The supply airflow 138 cools the perishable goods 118 in the refrigerated cargo space 119 of the transport container 106. It is to be appreciated that the refrigeration unit 22 can further be operated in reverse to warm the container system 106 when, for example, the outside temperature is very low. In the illustrated embodiment, the return air intake 136, the refrigeration unit outlet 140, the heat outlet 142, and the external air inlet 144 are configured as grilles to help prevent foreign objects from entering the refrigeration unit 22.

In the illustrated embodiment, a compressed natural gas heat exchanger 300 (hereinafter referred to as heat exchanger 300) may be seen in FIG. 2. The heat exchanger 300 includes a compressed natural gas coil 320 located within a compartment 302. The compressed natural gas coil 320 has a compressed natural gas inlet 322 and a compressed natural gas outlet 342. The heat exchanger 300 also includes a refrigerant coil 310 located within the compartment 302. The refrigerant coil 310 has a refrigerant inlet 306 and a refrigerant outlet 312. A heat transfer fluid 360 is located within the compartment 302. The heat transfer fluid 360 thermally connects the compressed natural gas coil 320 to the refrigerant coil 310.

In the illustrated embodiment the heat exchanger 300 is fluidly connected to the refrigeration unit 22 and the compressed natural gas tank 380. When filling a compressed natural gas tank 380 with compressed natural gas (hereinafter referred to as CNG), the CNG will flow through the heat exchanger 300, which uses the refrigerant diverted from the refrigeration unit 22 to cool the CNG. When filling the compressed natural gas tank 380 through the heat exchanger 300, bypass valves (e.g. 304 and 314) may be activated to divert the refrigerant flow out of the refrigeration unit 22 and to the refrigerant coil 310. Thus, the cooling provided to refrigerated cargo space 119, is shut off temporarily while the refrigerant is flowing through the refrigerant coil 310 within the heat exchanger 300. As seen in the illustrated embodiment, the bypass valves may include a first bypass valve 304 and a second bypass valve 314. The first bypass valve 304 is fluidly connected to the refrigeration unit 22 and the refrigerant coil 310. The first bypass 304 valve is configured to direct the refrigerant from the refrigerant heat rejection heat exchanger 34 to the refrigerant inlet 306, when the first bypass 304 valve is activated. The second bypass valve 314 is fluidly connected to the refrigeration unit 22 and the refrigerant coil 310. The second bypass valve 314 is configured to direct the refrigerant from the refrigerant outlet 312 to the suction side 33 of the refrigerant compression device 32, when the second bypass valve 314 is activated. The first bypass valve 304 and the second bypass valve 314 may be activated manually or by the controller 30. The controller 30 may also control the heat exchanger 300.

As the refrigerant flows into the heat exchanger 300 through the refrigerant inlet 306, it may pass through an electronic expansion valve 308 to quickly expand the refrigerant as needed. The expansion valve 308 may be an electronic expansion valve, a thermal valve, an orifice valve, or any other type of valve known to one of ordinary skill in the art. The refrigerant proceeds to circulate through the refrigerant coil 310 immersed in the heat transfer fluid 360.

On the other side of the heat exchanger 300, the CNG will enter through the compressed natural gas inlet 322 from a compressed natural gas dispenser, such as, for example a natural gas station. In an embodiment, the fill sequencing, pressure regulation, and fuel metering may be controlled by the compressed natural gas dispenser. The compressed natural gas inlet may include various check valves 324 as required. The CNG proceeds to flow through the compressed natural gas coil 320 immersed in the heat transfer fluid 360. Advantageously, cooling the natural gas, prior to entering the compressed natural gas tank 380, will help overcome the heat of compression when the natural gas enters the compressed natural gas tank 380.

The heat transfer fluid 360 thermally connects the compressed natural gas coil 320 to the refrigerant coil 310. The refrigerant traveling through the refrigerant coil 310 absorbs heat from the CNG in the compressed natural gas coil 320 through the heat transfer fluid 360. The heat transfer fluid 360 may be ethylene, glycol, brine, or any other type of heat transfer fluid known to one of ordinary skill in the art. Advantageously, using a heat transfer fluid 360 offers added safety by separating the high pressure compressed natural gas coil 320 from the low pressure refrigerant coil 310. Also, advantageously, utilizing a heat transfer fluid 360 allows the CNG escape through a compressed natural gas vent 350 in the event of a leak in the compressed natural gas coil 320. Further included is a compressed natural gas detection device 352. The compressed natural gas detection device 352 is a whistle that activates as CNG flows through the vent 350. An auditory sound is heard as the whistle activates.

After flowing through the refrigerant coil 310, the refrigerant will exit the heat exchanger 300 through the refrigerant outlet line 312 and travel to the second bypass valve 314. The second bypass valve 314 directs the refrigerant to flow to the suction side of the refrigerant compression device 32, where the refrigerant is compressed and then heat absorbed from the CNG is expelled through the heat outlet 142, using the fan 40. The refrigerant then moves onto the first bypass valve 304, where it will be directed to the heat exchanger 300. The refrigerant continues to circulate through the heat exchanger 300 until the compressed natural gas tank 380 is filled. Once the compressed natural gas tank 380 is filled, the bypass valves (304 and 314) may be deactivated allowing the refrigerant to flow back through the refrigerant heat absorption heat exchanger 38 and return to cooling the refrigerated cargo space 119. After flowing through the compressed natural gas coil 320 and out the compressed natural gas outlet 342, the CNG will flow into a compressed natural gas tank 380. The compressed natural gas outlet 342 may include various check valves 344 as required. The compressed natural gas tank 380 may also be fluidly connected to the prime mover 26 of the refrigeration unit 22, if the prime mover is a natural gas engine.

## Claims

1. A system for cooling compressed natural gas, the system comprising;
a compressed natural gas coil (320) located within a compartment (302), the compressed natural gas coil (320) having a compressed natural gas inlet (322) and a compressed natural gas outlet (342);
a refrigerant coil (310) located within the compartment (302), the refrigerant coil (310) having a refrigerant inlet (306) and a refrigerant outlet (312);
a heat transfer fluid located within the compartment (302), the heat transfer fluid thermally connecting the compressed natural gas coil (320) to the refrigerant coil (310);
a compressed natural gas flowing through the compressed natural gas coil (320); and
a refrigerant flowing through the refrigerant coil (310);
wherein the system further comprises:
a compressed natural gas vent (350) fluidly connected to the compartment (302); and
a compressed natural gas detection device (352) operably connected to the compressed natural gas vent (350);
wherein the compressed natural gas detection device (352) is a whistle that is configured to be activated as compressed natural gas flows through the compressed natural gas vent (350);
wherein the whistle is configured to emit an auditory sound as compressed natural gas flows through the compressed natural gas vent (350).

2. The system of claim 1, further comprising:
a refrigeration unit (22) fluidly connected to the refrigerant coil (310), the refrigeration unit (22) including at least one of a refrigerant compression device (32) and a refrigerant heat rejection heat exchanger (34), wherein the refrigerant compression device (32) includes a suction side.

3. The system of claim 2, further comprising:
a first bypass valve (304) fluidly connected to the refrigeration unit (22) and the refrigerant coil (310), the first bypass valve (304) being configured to direct the refrigerant from the refrigerant heat rejection heat exchanger (34) to the refrigerant inlet (306), when the first bypass valve (304) is activated; and
a second bypass valve (314) fluidly connected to the refrigeration unit (22) and the refrigerant coil (310), the second bypass valve (314) being configured to direct the refrigerant from the refrigerant outlet (312) to the suction side of the refrigerant compression device (32), when the second bypass valve (314) is activated.

4. The system of claim 1, further comprising:
a compressed natural gas tank (380) fluidly connected to the compressed natural gas outlet (342).

5. A method of cooling compressed natural gas, the method comprising:
flowing compressed natural gas through a compressed natural gas coil (320) located in a compartment (302), the compressed natural gas coil (320) having a compressed natural gas inlet (322) and a compressed natural gas outlet (342);
circulating a refrigerant through a refrigerant coil (310) located in the compartment (302), the refrigerant coil (310) having a refrigerant inlet (306) and a refrigerant outlet (312); and
transferring heat from the compressed natural gas coil (320) to the refrigerant coil (310) through a heat transfer fluid located within the compartment (302), the heat transfer fluid thermally connecting the compressed natural gas coil (320) to the refrigerant coil (310);
wherein the compartment (302) further comprises:
a compressed natural gas vent (350) fluidly connected to the compartment (302); and
a compressed natural gas detection device (352) operably connected to the compressed natural gas vent (350);
wherein the compressed natural gas detection device (352) is a whistle that is configured to be activated as compressed natural gas flows through the compressed natural gas vent (350); and
wherein the whistle is configured to emit an auditory sound as compressed natural gas flows through the compressed natural gas vent (350).

6. The method of claim 5, further comprising:
cooling, using a refrigeration unit (22), the refrigerant, the refrigeration unit (22) including at least one of a refrigerant compression device (32) and a refrigerant heat rejection heat exchanger (34), wherein the refrigerant compression device (32) includes a suction side.

7. The method of claim 6, further comprising:
directing, using a first bypass valve (304), the refrigerant from the refrigerant heat rejection heat exchanger (34) to the refrigerant inlet (306) when the first bypass valve (304) is activated, the first bypass valve (304) being fluidly connected to the refrigeration unit (22) and the refrigerant coil (310); and
directing, using a second bypass valve (314), the refrigerant from refrigerant outlet (312) to the suction side of the refrigerant compression device (32) when the second bypass valve (314) is activated, the second bypass valve (314) being fluidly connected to the refrigeration unit (22) and the refrigerant coil (310).

8. The method of claim 5, further comprising:
filling a compressed natural gas tank (380) with compressed natural gas from the compressed natural gas outlet (342), the compressed natural gas tank (380) being fluidly connected to the compressed natural gas outlet (342).

9. A controller (30) of a transport refrigeration system (200) comprising:
a processor;
a memory comprising computer-executable instructions that, when executed by the processor, cause the processor to perform the method according to one of claims 5 to 8

## Patentansprüche

1. System zum Kühlen von komprimiertem natürlichem Gas, wobei das System umfasst;
eine Rohrschlange (320) für komprimiertes natürliches Gas, die in einem Raum (302) angeordnet ist, wobei die Rohrschlange (320) für komprimiertes natürliches Gas einen Einlass (322) für komprimiertes natürliches Gas und einen Auslass (342) für komprimiertes natürliches Gas aufweist;
eine Kältemittelrohrschlange (310), die sich innerhalb des Raums (302) befindet, wobei die Kältemittelrohrschlange (310) einen Kältemitteleinlass (306) und einen Kältemittelauslass (312) aufweist;
ein Wärmeübertragungsfluid, das sich in dem Raum (302) befindet, wobei das Wärmeübertragungsfluid die Rohrschlange (320) für komprimiertes natürliches Gas thermisch mit der Kältemittelrohrschlange (310) verbindet;
ein komprimiertes natürliches Gas, das durch die Rohrschlange (320) für komprimiertes natürliches Gas strömt; und
ein Kältemittel, das durch die Kältemittelrohrschlange (310) strömt;
wobei das System ferner umfasst:
eine Entlüftungsöffnung (350) für komprimiertes natürliches Gas, die in Fluidverbindung mit dem Raum (302) steht; und
eine Detektionsvorrichtung (352) für komprimiertes natürliches Gas, die betriebsmäßig mit der Entlüftungsöffnung (350) für komprimiertes natürliches Gas verbunden ist;
wobei die Detektionsvorrichtung (352) für komprimiertes natürliches Gas eine Pfeife ist, die dazu konfiguriert ist,
aktiviert zu werden, wenn komprimiertes natürliches Gas durch die Entlüftungsöffnung (350) für komprimiertes natürliches Gas strömt;
wobei die Pfeife dazu konfiguriert ist, einen akustischen Ton auszugeben, wenn komprimiertes natürliches Gas durch die Entlüftungsöffnung (350) für komprimiertes natürliches Gas strömt.

2. System nach Anspruch 1, ferner umfassend:
eine Kühleinheit (22), die in Fluidverbindung mit der Kältemittelrohrschlange (310) steht, wobei die Kühleinheit (22) mindestens eines von einer Kältemittelkompressionsvorrichtung (32) und einem Kältemittel-Wärmeabgabe-Wärmetauscher (34) beinhaltet, wobei die Kältemittelkompressionsvorrichtung (32) eine Saugseite beinhaltet.

3. System nach Anspruch 2, ferner umfassend:
ein erstes Umgehungsventil (304), das in Fluidverbindung mit der Kühleinheit (22) und der Kältemittelrohrschlange (310) steht, wobei das erste Umgehungsventil (304) dazu konfiguriert ist, das Kältemittel von dem Kältemittel-Wärmeabgabe-Wärmetauscher (34) zu dem Kältemitteleinlass (306) zu leiten, wenn das erste Umgehungsventil (304) aktiviert ist; und
ein zweites Umgehungsventil (314), das in Fluidverbindung mit der Kühleinheit (22) und der Kältemittelrohrschlange (310) steht, wobei das zweite Umgehungsventil (314) dazu konfiguriert ist, das Kältemittel von dem Kältemittelauslass (312) zur Saugseite der Kältemittelkompressionsvorrichtung (32) zu leiten, wenn das zweite Umgehungsventil (314) aktiviert ist.

4. System nach Anspruch 1, ferner umfassend:
einen Tank (380) für komprimiertes natürliches Gas, der mit dem Auslass (342) für komprimiertes natürliches Gas in Fluidverbindung steht.

5. Verfahren zum Kühlen von komprimiertem natürlichem Gas, wobei das Verfahren umfasst:
Strömenlassen von komprimiertem natürlichem Gas durch eine Rohrschlange (320) für komprimiertes natürliches Gas, die in einem Raum (302) angeordnet ist, wobei die Rohrschlange (320) für komprimiertes natürliches Gas einen Einlass (322) für komprimiertes natürliches Gas und einen Auslass (342) für komprimiertes natürliches Gas aufweist;
Zirkulierenlassen eines Kältemittels durch eine Kältemittelrohrschlange (310), die sich in dem Raum (302) befindet, wobei die Kältemittelrohrschlange (310) einen Kältemitteleinlass (306) und einen Kältemittelauslass (312) aufweist; und
Übertragen von Wärme von der Rohrschlange (320) für komprimiertes natürliches Gas auf die Kältemittelrohrschlange (310) durch ein Wärmeübertragungsfluid, das sich in dem Raum (302) befindet, wobei das Wärmeübertragungsfluid die Rohrschlange (320) für komprimiertes natürliches Gas thermisch mit der Kältemittelrohrschlange (310) verbindet;
wobei der Raum (302) ferner umfasst:
eine Entlüftungsöffnung (350) für komprimiertes natürliches Gas, die in Fluidverbindung mit dem Raum (302) steht; und
eine Detektionsvorrichtung (352) für komprimiertes natürliches Gas, die betriebsmäßig mit der Entlüftungsöffnung (350) für komprimiertes natürliches Gas verbunden ist;
wobei die Detektionsvorrichtung (352) für komprimiertes natürliches Gas eine Pfeife ist, die dazu konfiguriert ist, aktiviert zu werden, wenn komprimiertes natürliches Gas durch die Entlüftungsöffnung (350) für komprimiertes natürliches Gas strömt; und
wobei die Pfeife dazu konfiguriert ist, einen akustischen Ton auszugeben, wenn komprimiertes natürliches Gas durch die Entlüftungsöffnung (350) für komprimiertes natürliches Gas strömt.

6. Verfahren nach Anspruch 5, ferner umfassend:
Kühlen, unter Verwendung einer Kühleinheit (22), des Kältemittels, wobei die Kühleinheit (22) mindestens eines von einer Kältemittelkompressionsvorrichtung (32) und einem Kältemittel-Wärmeabgabe-Wärmetauscher (34) beinhaltet, wobei die Kältemittelkompressionsvorrichtung (32) eine Saugseite beinhaltet.

7. Verfahren nach Anspruch 6, ferner umfassend:
Leiten, unter Verwendung eines ersten Umgehungsventils (304), des Kältemittels von dem Kältemittel-Wärmeabgabe-Wärmetauscher (34) zu dem Kältemitteleinlass (306), wenn das erste Umgehungsventil (304) aktiviert ist, wobei das erste Umgehungsventil (304) in Fluidverbindung mit der Kühleinheit (22) und der Kältemittelrohrschlange (310) steht; und
Leiten, unter Verwendung eines zweiten Umgehungsventils (314), des Kältemittels von dem Kältemittelauslass (312) zur Saugseite der Kältemittelkompressionsvorrichtung (32), wenn das zweite Umgehungsventil (314) aktiviert ist, wobei das zweite Umgehungsventil (314) in Fluidverbindung mit der Kühleinheit (22) und der Kältemittelrohrschlange (310) steht.

8. Verfahren nach Anspruch 5, ferner umfassend:
Befüllen eines Tanks (380) für komprimiertes natürliches Gas mit komprimiertem natürlichem Gas aus dem Auslass (342) für komprimiertes natürliches Gas, wobei der Tank (380) für komprimiertes natürliches Gas mit dem Auslass (342) für komprimiertes natürliches Gas in Fluidverbindung steht.

9. Steuerung (30) eines Transportkühlsystems (200), umfassend:
einen Prozessor;
einen Speicher, der computerausführbare Anweisungen umfasst, die, wenn sie von dem Prozessor ausgeführt werden, bewirken, dass der Prozessor das Verfahren nach einem der Ansprüche 5 bis 8 durchführt

## Revendications

1. Système de refroidissement de gaz naturel comprimé, le système comprenant ;
une bobine de gaz naturel comprimé (320) située à l'intérieur d'un compartiment (302), la bobine de gaz naturel comprimé (320) ayant une entrée de gaz naturel comprimé (322) et une sortie de gaz naturel comprimé (342) ;
une bobine de réfrigérant (310) située à l'intérieur du compartiment (302), la bobine de réfrigérant (310) ayant une entrée de réfrigérant (306) et une sortie de réfrigérant (312) ; un fluide caloporteur situé à l'intérieur du compartiment (302), le fluide caloporteur connectant thermiquement la bobine de gaz naturel comprimé (320) à la bobine de réfrigérant (310) ;
un gaz naturel comprimé s'écoulant à travers la bobine de gaz naturel comprimé (320) ; et
un réfrigérant s'écoulant à travers la bobine de réfrigérant (310) ;
dans lequel le système comprend en outre :
un évent de gaz naturel comprimé (350) connecté fluidiquement au compartiment (302) ; et
un dispositif de détection de gaz naturel comprimé (352) connecté de manière fonctionnelle à l'évent de gaz naturel comprimé (350) ;
dans lequel le dispositif de détection de gaz naturel comprimé (352) est un sifflet qui est configuré pour être activé lorsque le gaz naturel comprimé s'écoule à travers l'évent de gaz naturel comprimé (350) ;
dans lequel le sifflet est configuré pour émettre un son auditif lorsque le gaz naturel comprimé s'écoule à travers l'évent de gaz naturel comprimé (350).

2. Système selon la revendication 1, comprenant en outre :
une unité de réfrigération (22) connectée fluidiquement à la bobine de réfrigérant (310), l'unité de réfrigération (22) comportant au moins l'un parmi un dispositif de compression de réfrigérant (32) et un échangeur de chaleur à rejet de chaleur de réfrigérant (34), dans lequel le dispositif de compression de réfrigérant (32) comporte un extrados.

3. Système selon la revendication 2, comprenant en outre :
une première soupape de dérivation (304) connectée fluidiquement à l'unité de réfrigération (22) et à la bobine de réfrigérant (310), la première soupape de dérivation (304) étant configurée pour diriger le réfrigérant de l'échangeur de chaleur à rejet de chaleur de réfrigérant (34) vers l'entrée de réfrigérant (306), lorsque la première soupape de dérivation (304) est activée ; et
une seconde soupape de dérivation (314) connectée fluidiquement à l'unité de réfrigération (22) et à la bobine de réfrigérant (310), la seconde soupape de dérivation (314) étant configurée pour diriger le réfrigérant de la sortie de réfrigérant (312) vers l'extrados du dispositif de compression de réfrigérant (32), lorsque la seconde soupape de dérivation (314) est activée.

4. Système selon la revendication 1, comprenant en outre :
un réservoir de gaz naturel comprimé (380) connecté fluidiquement à la sortie de gaz naturel comprimé (342).

5. Procédé de refroidissement de gaz naturel comprimé, le procédé comprenant :
l'écoulement de gaz naturel comprimé à travers une bobine de gaz naturel comprimé (320) située dans un compartiment (302), la bobine de gaz naturel comprimé (320) ayant une entrée de gaz naturel comprimé (322) et une sortie de gaz naturel comprimé (342) ;
la circulation d'un réfrigérant à travers une bobine de réfrigérant (310) située dans le compartiment (302), la bobine de réfrigérant (310) ayant une entrée de réfrigérant (306) et une sortie de réfrigérant (312) ; et
le transfert de chaleur de la bobine de gaz naturel comprimé (320) à la bobine de réfrigérant (310) à travers un fluide caloporteur situé à l'intérieur du compartiment (302), le fluide caloporteur connectant thermiquement la bobine de gaz naturel comprimé (320) à la bobine de réfrigérant (310) ;
dans lequel le compartiment (302) comprend en outre :
un évent de gaz naturel comprimé (350) connecté fluidiquement au compartiment (302) ; et
un dispositif de détection de gaz naturel comprimé (352) connecté de manière fonctionnelle à l'évent de gaz naturel comprimé (350) ;
dans lequel le dispositif de détection de gaz naturel comprimé (352) est un sifflet qui est configuré pour être activé lorsque le gaz naturel comprimé s'écoule à travers l'évent de gaz naturel comprimé (350) ; et
dans lequel le sifflet est configuré pour émettre un son auditif lorsque le gaz naturel comprimé s'écoule à travers l'évent de gaz naturel comprimé (350).

6. Procédé selon la revendication 5, comprenant en outre :
le refroidissement, à l'aide d'une unité de réfrigération (22), du réfrigérant, l'unité de réfrigération (22) comportant au moins l'un parmi un dispositif de compression de réfrigérant (32) et un échangeur de chaleur à rejet de chaleur de réfrigérant (34), dans lequel le dispositif de compression de réfrigérant (32) comporte un extrados.

7. Procédé selon la revendication 6, comprenant en outre :
la direction, à l'aide d'une première soupape de dérivation (304), du réfrigérant de l'échangeur de chaleur à rejet de chaleur de réfrigérant (34) vers l'entrée de réfrigérant (306), lorsque la première soupape de dérivation (304) est activée, la première soupape de dérivation (304) étant connectée fluidiquement à l'unité de réfrigération (22) et à la bobine de réfrigérant (310) ; et
la direction, à l'aide d'une seconde soupape de dérivation (314) du réfrigérant de la sortie de réfrigérant (312) vers l'extrados du dispositif de compression de réfrigérant (32), lorsque la seconde soupape de dérivation (314) est activée, la seconde soupape de dérivation (314) étant connectée fluidiquement à l'unité de réfrigération (22) et à la bobine de réfrigérant (310) .

8. Procédé selon la revendication 5, comprenant en outre :
le remplissage d'un réservoir de gaz naturel comprimé (380) avec du gaz naturel comprimé à partir de la sortie de gaz naturel comprimé (342), le réservoir de gaz naturel comprimé (380) étant connecté fluidiquement à la sortie de gaz naturel comprimé (342) .

9. Dispositif de commande (30) d'un système de réfrigération de transport (200) comprenant :
un processeur ;
une mémoire comprenant des instructions exécutables par ordinateur qui, lorsqu'elles sont exécutées par le processeur, amènent le processeur à exécuter le procédé selon l'une des revendications 5 à 8
